# EUROPÄISCHE PATENTSCHRIFT

(11) **EP 2 801 677 B1**
(45) Veröffentlichungstag und Bekanntmachung des Hinweises auf die Patenterteilung: **03.04.2019**
(21) Anmeldenummer: 14167340.0
(22) Anmeldetag: 07.05.2014
(51) Int. Cl.: E04B 1/76, B32B 15/08, B32B 15/085, B32B 5/22

(54) **Eine mit mindestens einer Kaschierung versehene Holzfaserdämmstoffplatte und ein Verfahren zu deren Herstellung**
A wood fibre insulation panel with at least one lamination and a method for their production
Plaque d'isolant en fibres de bois pourvue d'au moins un doublage et procédé de fabrication de celle-ci

(30) Priorität: 07.05.2013 EP 13166808
(43) Veröffentlichungstag der Anmeldung: 12.11.2014
(73) Patentinhaber: SWISS KRONO Tec AG, 6004 Luzern (CH)
(72) Erfinder: Siems, Jens, 17139 Malchin (DE); Hecht, Hendrik, 16816 Buskow (DE)
(74) Vertreter: Maikowski & Ninnemann Patentanwälte Partnerschaft mbB

(56) Entgegenhaltungen:
- EP-A2- 2 500 123
- DE-A1- 10 056 829
- US-A- 4 040 213
- US-A- 5 009 043

## Beschreibung

Die vorliegende Erfindung betrifft eine Holzfaserdämmstoffplatte nach dem Oberbegriff des Anspruchs 1 und ein Verfahren zu deren Herstellung nach Anspruch 10.

### Beschreibung

Holzfaserdämmstoffplatten bzw. -matten werden zunehmend in der Bauindustrie als Dämm- bzw. Isolierstoff verwendet. Derartige Holzfaserdämmstoffplatten können im Nassverfahren oder auch im Trockenverfahren hergestellt werden.

Im Nassverfahren werden feuchte Holzfasern ohne Trocknung unmittelbar aus dem Aufschlussverfahren zur Herstellung von Holzfaserplatten verwendet. Eine Trocknung erfolgt nach Verpressen der Holzfasern. Die nach diesem Verfahren hergestellten Platten bzw. Matten sind relativ dünn und der Aufwand bei der Herstellung ist hoch, insbesondere fallen hohe Kosten für die Trocknung der bereits verpressten Platten an.

Hingegen werden im Trockenverfahren trockene Holzfasern gegebenenfalls in einem Gemisch mit einem Bindemittel und anderen Zusatzstoffen auf ein Transportband aufgetragen und anschließend verpresst. So wird zum Beispiel in der DE 100 56 829 C2 ein Verfahren zur Herstellung von Dämmstoffplatten aus Holzfasern und Bindemittel beschrieben, in welchem die trockenen Holzfasern und Bindemittel zum Beispiel in Form von Kunststofffasern miteinander in einem gewünschten Verhältnis gemischt werden, das Gemisch in einer einzigen Lage auf ein endloses Siebband aufgestreut, das aufgestreute Gemisch komprimiert bzw. kalibriert und anschließend in einem nachgeordneten Heizaggregat verfestigt wird. Das hier beschriebene Trockenverfahren ermöglicht die Herstellung von Holzfaserdämmstoffmatten mit einer bestimmten Dicke und einer besonders geringen Rohdichte.

Aus der DE 10056829 C2 ist des Weiteren bekannt, auf ein Transportband abgelegte Holzfaser-Bindemittel-Gemisch mit einer luftdurchlässigen Kaschierung zu versehen. Entsprechend kann eine luftdurchlässige Kaschierung kontinuierlich auf das aufgestreute Holzfaser-Bindemittel-Gemisch vor dem Komprimieren bzw. Kalibrieren desselbigen aufgelegt werden.

Als Alternative zum Auflegen einer luftdurchlässigen Kaschierung auf das aufgestreute Holzfaser-Bindemittel-Gemisch kann gemäß der DE 10056829 C2 auch eine luftundurchlässige Kaschierung bzw. Beschichtung auf bereits vernetzte Dämmstoffplatten sowohl unterseitig als auch oberseitig abgelegt werden. Entsprechend erfolgt hier eine Beschichtung einer bereits vernetzten Holzfaserdämmstoffplatte mit einer luftundurchlässigen Kaschierung nach dem Komprimieren und Kalibrieren des Holzfaser-Bindemittel-Gemisches.

Aus der WO 99/22084 ist ebenfalls die Verwendung einer Gazelage als Beschichtung von Holzfaserdämmstoffplatten bekannt. Das oberseitige und unterseitige Auflegen einer luftdurchlässigen Gazeschicht erfolgt vor dem Verpressen bzw. Verdichtens des Holzfasergemisches.

Die bisher bekannten Möglichkeiten zur Kaschierung von Holzfaserdämmstoffplatten sind somit beschränkt. Insbesondere ist die Kaschierung von Holzfaserdämmstoffplatten mit Folien im Prozess der Herstellung der Holzfaserdämmstoffplatten eingeschränkt. Wie den obigen Beispielen entnehmbar, ist es derzeit lediglich möglich, luftdurchlässige Kaschierungen bzw. Beschichtungen im Herstellungsverfahren der Holzfaserdämmstoffplatten aufzutragen. Das Aufbringen von luftundurchlässigen Kaschierungen bzw. Folien wird typischerweise erst nach dem Kalibrieren bzw. Verdichten des Holzfasergemisches durchgeführt und erfordert daher einen zusätzlichen Prozessschritt mit einer separaten Fertigungsanlage und Bedienung.

Entsprechend besteht nach wie vor ein großer Bedarf an Holzfaserdämmstoffplatten, die mittels einer Kaschierung einer speziellen Folie an verschiedene Verwendungsoptionen angepasst werden können, deren Herstellungsprozess zudem leicht adaptierbar und kostengünstig ist.

Der vorliegenden Erfindung liegt daher die technische Aufgabe zugrunde, eine Holzfaserdämmstoffplatte und ein Verfahren zu deren Herstellung bereitzustellen, bei welchem das Auflegen einer luftundurchlässigen Kaschierung unmittelbar im Herstellungsprozess der Holzfaserdämmstoffmatte möglich ist.

Diese Aufgabe wird erfindungsgemäß durch eine mit einer Kaschierung versehene Holzfaserdämmstoffplatte mit den Merkmalen des Anspruchs 1 und deren Herstellung in einem Verfahren nach Anspruch 10 gelöst.

Die erfindungsgemäße mit mindestens einer Kaschierung versehene Holzfaserdämmstoffplatte umfasst demnach mindestens eine Kaschierung, welche wiederum mindesten zwei luftundurchlässige Schichten, mindestens eine Stützschicht und mindestens eine Bindemittelschicht umfasst.
Die vorliegend verwendete Kaschierung stellt demnach eine Mehrkomponentenbeschichtung oder Mehrkomponentenfolie dar, wobei die genannten Schichten jeweils separate Lagen ausbilden. Die Kaschierung kann sowohl auf der Oberseite der Holzfaserdämmstoffplatte als auch auf der Unterseite derselbigen angebracht werden.

Erfindungsgemäß bilden die mindestens zwei luftundurchlässigen Schichten eine obere, nach außen weisende erste Lage der Kaschierung. Somit stellen die luftundurchlässigen Schichten die oberste Schicht der Kaschierung dar und dienen gleichzeitig als eine Funktionsschicht, mittels derer zusätzliche Eigenschaften, wie eine Erhöhung des Wärme- bzw. Kältereflexionsgrades, zum Beispiel beim Einsatz von Alufolien oder eine elektrische Entladungsmöglichkeit bewirkt werden können.

Es ist möglich, dass mindestens eine luftundurchlässige Schicht aus mindestens einer Folie bzw. Film aus einem wasserabweisenden Material, einem thermisch leitenden Material und/oder einem elektrisch leitenden Material besteht. Insbesondere besteht mindestens eine luftundurchlässige Schicht aus Aluminium. Es ist aber auch denkbar andere Materialien wie z.B. aus Kunststoff und hier insbesondere Polypropylen (PP), Polyethylen (PE) oder andere Kunststoffpolymere oder -copolymere zu verwenden.

Erfindungsgemäß weist die Kaschierung zwei luftundurchlässige Schichten auf. Es ist auch vorstellbar drei oder vier luftundurchlässige Schichten in der vorliegenden Kaschierung zu verwenden.

Erfindungsgemäß werden in der Kaschierung eine erste luftundurchlässige Schicht aus Aluminium (Aluminiumfilm) und eine zweite luftundurchlässige Schicht aus Kunststoffmaterial, insbesondere Polypropylenfolie verwendet. Das Kunststoffmaterial bildet bevorzugt die oberste, nach außen weisende Schicht der Kaschierung.

Insbesondere bei Verwendung der mit der vorliegenden Kaschierung versehenen Holzfaserdämmstoffplatte als Wärmedämmstoffplatte ist eine Vielzahl von Vorteilen erkennbar: die Verwendung einer Aluminiumfolie als thermisch leitende Schicht sorgt für gute Isolierungseigenschaften der Platte während die zusätzliche Anordnung einer Kunststofffolie auf dieser thermisch leitenden Schicht (z.B. in Form von Aluminiumfolie) eine chemische Reaktion oder sonstige ungünstige Wechselwirkung der metallischen Folie mit Estrich, Beton oder auch Holz verhindert.

Erfindungsgemäß ist die mindestens eine Stützschicht als eine zwischen der Holzfaserdämmstoffplatte, genauer deren Oberfläche, und der mindestens einen luftundurchlässigen Schicht angeordnete zweite Lage der Kaschierung ausgebildet. Insbesondere ist die Stützschicht zwischen einer auf der Holzfaserdämmstoffplatte vorgesehenen Bindemittelschicht und der luftundurchlässigen Schicht angeordnet. Die stützende Beschichtung ist demnach einerseits in direktem Kontakt mit der Unterseite der luftundurchlässigen Schicht, das heißt, der nach innen weisenden Seite der luftundurchlässigen Schicht, und andererseits ist die stützende Beschichtung auf der noch weiter unten zu beschreibenden Bindemittelbeschichtung angeordnet, wobei letztere wiederum auf der zu beschichtenden Oberfläche der Holzfaserdämmstoffplatte vorgesehen ist. Die stützende Beschichtung bzw. Stützschicht dient insbesondere der Verbesserung der Stabilität der oberen ersten luftundurchlässigen Lage wie z.B. einer Aluminiumfolie und somit auch der Erhöhung der Stabilität des gesamten Produktes.

Es ist bevorzugt, dass die mindestens eine Stützschicht aus mindestens einem Vlies, Gaze oder Gewebe besteht, die entsprechend gasdurchlässig bzw. luftdurchlässig sind. Entsprechend stellt die Stützschicht auch eine luftdurchlässige Schicht dar. Insbesondere ist die mindestens eine Stützschicht als zweite Lage der Mehrkomponentenkaschierung aus mindestens einem Glasvliesgewebe gebildet. Das Vliesgewebe kann zum Beispiel in Form eines Netzes oder gitterähnlichen Gewebes ausgebildet sein. Auch hier ist es möglich, zwei oder mehr Stützschichten zu verwenden.

Wie bereits oben erwähnt, ist die mindestens eine Bindemittelschicht als eine zwischen der Holzfaserdämmstoffplatte und der mindestens einen Stützschicht angeordnete dritte Lage der Kaschierung ausgebildet. Die Bindemittelbeschichtung ist demnach direkt auf der zu beschichtenden Oberfläche der Holzfaserdämmstoffplatte angeordnet und grenzt mit der der Oberfläche der Holzfaserdämmstoffplatte gegenüberliegenden Seite an die stützende Beschichtung bzw. Stützschicht an. Die Bindemittelschicht wird bevorzugt durch Erwärmen aktiviert und ermöglicht so ein Verkleben der Holzfaserdämpfstoffmatte mit der über der Bindemittelschicht vorgesehenen luftundurchlässigen Schicht und der Stützschicht. Die Bindemittelschicht kann auch als eine Verbindungsschicht zur Verbindung der Kaschierung mit der Holzfaserschicht angesehen werden.

Es ist insbesondere bevorzugt, wenn die mindestens eine Bindemittelschicht (oder Verbindungsschicht) ein Bindemittel ausgewählt aus der Gruppe enthaltend Polyethylen, Polypropylen und weiteren geeigneten Bindemitteln enthält. Weitere geeignete Bindemittel für die Bindemittelschicht können zum Beispiel Acrylnitril-Butadien-Styrol, Polyamid, Polyoxymethylen, Polystyrol oder Gemische davon sein.

In einer weiteren Ausführungsform der Holzfaserdämmstoffplatte ist dieselbige aus einem Fasergemisch enthaltend Holzfasern, mindestens ein Bindemittel und gegebenenfalls weitere Additive, insbesondere Flammschutzmittel hergestellt.

Zur Herstellung der Holzfaserdämmstoffplatte werden bevorzugt Holzfasern, insbesondere trockene Holzfasern, mit einer Länge von 1,5 mm bis 20 mm und einer Dicke von 0,05 mm bis 1 mm verwendet.

Das zur Herstellung der Holzfaserdämmstoffmatte verwendete Fasergemisch kann 60 bis 90 Gew%, bevorzugt 70 bis 80 Gew% an Holzfasern und 5 bis 20 Gew%, bevorzugt 10 bis 15 Gew% an Bindemitteln umfassen.

Als geeignetes Bindemittel für das Holzfasergemisch können wiederum formaldehydhaltige Harze wie Harnstoffharze oder Melaminharze, Isocyanate oder aber Kunststofffasern eingesetzt werden.

Bevorzugt ist das weitere Bindemittel für das Holzfasergemisch mindestens ein Isocyanat, ausgewählt aus einer Gruppe enthaltend aliphatische und aromatische Isocyanate. Typischerweise können als aliphatische Isocyanate z.B. Hexamethylendiisocyanat (HDI), Isophorondiisocyanat (IPDI) und/oder 1,4-Cyclohexyldiisocyanat (CHDI) verwendet werden. Als bevorzugte aromatische Polyisocyanate können Polymeres Diphenylmethandiisocyanat (PMDI) Toluylendiisocyanat (TDI) und/oder Diphenylmethandiisocyanat (MDI) zum Einsatz kommen, wobei PMDI besonders bevorzugt ist. Das Isocyanat unterliegt bei seiner Verwendung als Bindemittel zwei chemischen Reaktionen. Zum einen bildet es in Gegenwart von Wasser Polyharnstoff aus. Parallel erfolgt die Anbindung an die Holzfasern durch Ausbildung einer Urethan-Bindung durch die Reaktion von Isocyanate mit den freien Hydroxy-Gruppen der Zellulose.

Als Bindemittel für das Holzfasergemisch können aber auch Kunststofffasern zum Einsatz kommen. Die Kunststofffasern können als Monokomponenten-Fasern oder als Bikomponenten-Fasern vorliegen.

Werden Monokomponenten-Fasern verwendet, bestehen diese bevorzugt aus Polyethylen oder anderen Kunststoffen mit einem niedrigen Schmelzpunkt.

Bikomponentenfasern (auch als BiCo-Stützfasern bezeichnet) bestehen typischerweise aus einem Tragfilament oder aus einer Kernfaser aus einem Kunststoff mit höherer Temperaturbeständigkeit, insbesondere Polypropylen, die aus einem Kunststoff mit einem niedrigeren Schmelzpunkt, insbesondere aus Polyethylen, umhüllt bzw. ummantelt ist. Die Hülle bzw. der Mantel ermöglicht nach Aufschmelzen eine Vernetzung der Holzfasern.

Das Flammschutzmittel kann typischerweise in einer Menge zwischen 1 und 10 Gew%, bevorzugt zwischen 3 und 7 Gew%, insbesondere bevorzugt 5 Gew% dem Holzfaser-Bindemittel-Gemisch zugegeben werden.

Typische Flammschutzmittel sind ausgewählt aus der Gruppe umfassend Phosphate, Borate, insbesondere Ammoniumpolyphosphat, Tris(tri-bromneopentyl)phosphat, Zinkborat oder Borsäurekomplexe von mehrwertigen Alkoholen.

Die vorliegende Holzfaserdämmplatte kann eine Rohdichte zwischen 20 und 170 kg/m³, bevorzugt zwischen 50 und 150 kg/m³, insbesondere bevorzugt zwischen 100 und 140 kg/m³ aufweisen.

Die Dicke der vorliegenden Holzfaserdämmstoffplatte kann zwischen 3 und 20 mm, bevorzugt zwischen 5 und 15 mm betragen, wobei insbesondere eine Dicke von 5 mm bevorzugt ist.

Entsprechend wird vorliegend eine Holzfaserdämmstoffplatte bereitgestellt, die aufgrund der Kaschierung mittels einer Mehrkomponentenfolie bzw. Mehrkomponentenbeschichtung auf einer oder beiden Seiten zusätzliche Eigenschaften, wie eine erhöhte Dichte und damit verbundene veränderte Tritt- und Gehschalleigenschaften aufweist. Auch kann durch den Einsatz von zum Beispiel Alufolien, bevorzugt in Verbindung mit einer weiteren Kunststofffolie, als luftundurchlässige Beschichtung der Wärme- bzw. Kältereflexionsgrad einer solchen Holzfaserdämmstoffmatte erhöht werden. Bei geeigneter Wahl der als Kaschierung verwendeten obersten luftundurchlässigen Schicht zum Beispiel durch Verwendung eines elektrisch leitenden Materials ist die Verwendung der vorliegenden Holzfaserdämmstoffmatten als antistatische Matte im Unterboden von begehbaren Fußbodenoberflächen möglich sowie die damit verbundene elektrische Entladung. Des Weiteren können vorliegend die Wärmedämmeigenschaften einer Holzfaserdämpfstoffmatte mit den technischen Möglichkeiten einer Mehrkomponentenfolie in beliebiger Weise kombiniert werden.

Entsprechend können die vorliegenden Holzfaserdämmstoffplatten Verwendung als Wärmedämmstoffplatten oder als antistatische Unterböden von begehbaren Fußbodenoberflächen finden.

Eine bevorzugte Anwendung der vorliegenden Holzfaserdämmstoffplatte liegt z.B. im Dachausbau. So wird üblicherweise beim Dachausbau zwischen den Holzbalken eine Gefachdämmung eingebaut, die häufig mit einer Kunststofffolie z.B. einer Polyethylen-Folie nach innen abgedeckt wird. Anstatt einer Kunststofffolie ist es nunmehr möglich die vorliegende Holzfaserdämmstoffplatte mit einer nach innen zeigenden Kaschierung auf die Gefachdämmung aufzubringen, d.h. die Holzfaserdämmstoffplatte wird so aufgebracht, dass die Kaschierung auf der Gefachdämmung aufliegt bzw. an diese angrenzt.

Die vorliegende mit mindestens einer Kaschierung versehene Holzfaserdämmstoffplatte kann in einem Verfahren mit den folgenden Schritten hergestellt werden:
a) Herstellen von Holzfasern aus lignozellulosehaltigen Ausgangsmaterial, wie z.B. aus Holzhackschnitzeln,
b) In-Kontaktbringen der Holzfasern mit mindestens einem zur Vernetzung der Holzfasern geeigneten Bindemittel,
c) Aufbringen, z.B. Aufstreuen oder Aufblasen, der Mischung aus Holzfasern und dem mindestens einem zur Vernetzung der Holzfasern geeigneten Bindemittel auf ein Transportband,
d) Auflegen von mindestens einer Kaschierung (auch als Folienpaket beschreibbar) umfassend mindestens eine luftundurchlässige Schicht, mindestens eine Stützschicht und mindestens eine Bindemittelschicht auf das Transportband aufgebrachte Holzfaser-Bindemittel-Gemisch, und
e) Kalibrieren des mit der mindestens einen Kaschierung versehenen Holzfaser-Bindemittel-Gemisches bei Temperaturen zwischen 100°C und 170°C, bevorzugt 130°C und 150°C, insbesondere bei 130°C.

Somit erfolgt in dem vorliegenden Verfahren das Auflegen der Kaschierung, die insgesamt luftundurchlässig ist, im Gegensatz zu den bisher herkömmlichen Verfahren somit bereits vor dem Verdichten bzw. Kalibrieren des Holzfaser-Bindemittel-Gemisches und der damit einher gehenden Vernetzung der Holzfasern.

Während des Kalibrieren des mit der Kaschierung versehenen Holzfaser-Bindemittel-Gemisches gemäß Schritt e) kommt es zum Anschmelzen der Bindemittelschicht der Kaschierung, wobei diese Anschmelzung nach dem Abkühlen eine Verbindung der Kaschierungsfolie mit der Holzfaserdämpfstoffmatte sicherstellt.

In einer Ausführungsform des vorliegenden Verfahrens erfolgt das Auflegen der Kaschierung auf das auf das Transportband aufgestreute bzw. aufgeblasene Holzfaser-Bindemittel-Gemisch kontinuierlich. Durch geeignete Maßnahmen in der Ausführung der Anlage ist ein Auflegen der Kaschierung sowohl auf die Unterseite als auch auf die Oberseite des Holzfaser-Bindemittel-Gemisches möglich.

Zur Herstellung der Holzfasern gemäß Schritt a) werden die Holzhackschnitzel zunächst gereinigt, anschließend zerfasert und getrocknet.

Das In-Kontaktbringen der Holzfasern mit dem mindestens einen Bindemittel in Schritt b) erfolgt bevorzugt in einem Blow-Line-Verfahren, bei dem das Bindemittel in den Holzfaserstrom eingespritzt wird. Hierbei ist es möglich, dass die beschriebenen Bindemittel zur Holzfaservernetzung in der Blow-Line einem Holzfaser-Dampfgemisch zugeführt werden. Im Falle der Verwendung von Bikomponenten-Fasern werden diese hingegen den trockenen Holzfasern zugemischt.

Geeignete Bindemittel für das Holzfaser-Gemisch wurden vorstehend bereits angeführt, wobei zu beachten ist, dass sich das für die Vernetzung der Holzfasern im Holzfasergemisch verwendete Bindemittel von dem Bindemittel in der Bindemittelschicht der Kaschierung unterscheiden oder auch gleich sein kann.

Es ist ebenfalls vorstellbar, dass mehr als ein Bindemittel zur Vernetzung der Holzfasern verwendet werden. So können neben den bereits erwähnten Bindemitteln aus der Gruppe der Isocyanate, Phenolharze oder Komponentenfasern weitere Bindemittel, wie Granulat aus Kunststoff zugesetzt werden.

Es ist auch denkbar, das Bindemittel zur Vernetzung der Holzfasern während des Dämpfens der Hackschnitzel einzuführen oder im Refiner zuzugeben.

Dabei können 5 bis 20 Gew%, bevorzugt 10 bis 15 Gew % an Bindemittel auf die Holzfasern aufgetragen werden.

Es ist aber auch denkbar, das Bindemittel mittels Trockenbeleimung mit den Holzfasern in Kontakt zu bringen. Das Bindemittel wird hier durch extrem feines Verdüsen auf die getrockneten Holzfasern aufgebracht. Eine derartige Trockenbeleimung reduziert den Leimverbrauch gegenüber einer Blow-Line-Beleimung drastisch.

Das oben erwähnte Flammschutzmittel kann zu jedem Zeitpunkt vor dem Auflegen der Kaschierung dem Holzfaser-Bindemittel-Gemisch zugegeben werden. So kann das Flammschutzmittel zusammen mit dem Bindemittel in den Holzfaser-Strom eingespritzt werden oder kann nach Aufstreuen oder Aufblasen des Holzfaser-Bindemittel-Gemisches auf das Transportband auf dasselbige aufgesprüht werden.

Nach Auftragen z.B. durch Streuen oder Aufblasen der Mischung aus Holzfasern, Bindemittel und ggf. Flammschutzmittel auf ein Transportband unter Ausbildung einer Holzfasermatte kann zunächst ein Vorpressen erfolgen, bei der die Dicke der Matte im Rahmen einer kalten Vorverdichtung reduziert wird.

In einem nächsten Schritt erfolgt wie oben angeführt in Schritt d) das Auflegen der mindestens einen Kaschierung umfassend mindestens eine luftundurchlässige Schicht, mindestens eine Stützschicht, und mindestens eine Bindemittelschicht auf das Transportband aufgebrachte Holzfaser-Bindemittelgemisch.

Das Auflegen der mindestens einen Kaschierung erfolgt bevorzugt kontinuierlich, wobei das Holzfaser-Bindemittel-Gemisch sowohl oberseitig als auch unterseitig mit der luftundurchlässigen Kaschierung versehen werden kann.

Die Herstellung der Kaschierung erfolgt derart, dass in einem ersten Schritt die erste luftundurchlässige Schicht (z.B. Aluminiumfolie und/oder Kunststofffolie) auf ein Transportband aufgebracht wird, in einem zweiten Schritt die luftdurchlässige Schicht (z.B. in Form eines Vlieses) auf der luftundurchlässigen Schicht abgelegt wird, und in einem dritten Schritt die Bindemittelschicht aufgesprüht oder anderweitig aufgetragen wird. Es ist z.B. denkbar, dass die Bindemittelschicht in Form eines festen Films aufgelegt wird. Die verschiedenen Schichten werden abschließend zu einer Kaschierung (Folienpaket) verpresst.

Im Falle der Verwendung einer Kaschierung mit zwei luftundurchlässigen Schichten erfolgt zunächst das Aufbringen der nach außen weisenden luftundurchlässigen Schicht (z.B. Kunststofffolie wie PP-Folie) auf ein Transportband, auf welche anschließend die zweite luftundurchlässige Schicht (z.B. Aluminiumfolie) aufgelegt wird. Auflegen der luftdurchlässigen Schicht und der Bindemittelschicht erfolgen wie gehabt.

Das Kalibrieren bzw. Verdichten des mit der Kaschierung versehenen Holzfaser-Bindemittel-Gemisches erfolgt, wie vorangehend ausgeführt, bei Temperaturen zwischen 100 und 170°C, bevorzugt 130 und 150°C, insbesondere bei 130°C.

Während des Kalibrierens kommt es typischerweise zu einer Aktivierung des Bindemittels im Holzfasergemisch z.B. einem Aufschmelzen des thermoplastischen Mantels im Falle der Verwendung von Bikomponentenfasern als Bindemittel, wodurch eine feste Verbindung zwischen den Holzfasern und dem Bindemittel hergestellt wird.

Gleichzeitig wird durch die auf die Kaschierung und hier insbesondere auf die in der Kaschierung vorgesehene Bindemittelschicht selbst einwirkende Kontaktwärme und das Anströmen mit warmer Luft die Bindemittelschicht aktiviert, so dass diese wenigstens teilweise in das Holzfaser-Kunststoff-Fasergemisch eindringen kann, so dass es zu einer innigen Klebverbindung der Kaschierung und der Holzfaserdämmstoffplatte kommt.

Der für das Kalibrieren bzw. Verdichten zum Einsatz kommende Durchlaufofen umfasst mehrere Heizregister, wobei warme bzw. heiße Luft in einem Register von oben und im nächsten von unten immer abwechselnd auf die Matte strömt. In Transportrichtung gesehen nimmt die Register-Einlauftemperatur von 100°C auf 170°C, bevorzugt 120°C auf 150°C zu und die Register-Auslauftemperatur beträgt passend 75°C bis 130°C.

In der Endbearbeitung wird die Fasermatte schließlich auf die gewünschten Maße reduziert und gekühlt; die Kühlung erfolgt bevorzugt während der Kalibrierung und in der Kühlzone des Durchlaufofens.

Nach Fertigstellung der Holzfaserdämmstoffmatte mit einer Kaschierung wird eine Mattenbesäumung durchgeführt, während der Seitenstreifen von der Fasermatte abgetrennt werden und die Seitenstreifen in den Prozess zurückgeführt werden.

Gegenstand der vorliegenden Erfindung ist ebenfalls ein Verfahren zum kontinuierlichen Auflegen einer Kaschierung auf mindestens einen Holzfaserkuchen bzw. ein Holzfaser-Bindemittel-Gemisch, wobei die Kaschierung mindestens eine Bindemittelschicht umfasst. In diesem Verfahren wird die mindestens eine Bindemittelschicht angeschmolzen, so dass eine kraftschlüssige Verbindung der mindestens einen Kaschierung mit den Holzfasern des Holzfaserkuchens bzw. des Holzfaser-Bindemittel-Gemisches entsteht.

Das Anschmelzen der Bindemittelschicht der Kaschierung bzw. Mehrkomponentenfolie kann bei Temperaturen zwischen 100°C und 170°C, bevorzugt 130°C und 150°C, insbesondere bei 130°C z.B. in einem Durchlaufofen mit mehreren Heizregistern erfolgen, wobei warme bzw. heiße Luft in einem Register von oben und im nächsten von unten immer abwechselnd auf den Holzfaserkuchen strömt.

Die verwendete Kaschierung umfasst neben der mindestens einen Bindemittelschicht ebenfalls mindestens eine luftundurchlässige Schicht und mindestens eine Stützschicht, wie oben bereits beschrieben.

Die Erfindung wird nachfolgend unter Bezugnahme auf die Figuren der Zeichnungen an einem Ausführungsbeispiel näher erläutert. Es zeigen:
- Figur 1: eine perspektivische Ansicht eines Querschnitts einer Holzfaserdämmstoffplatte gemäß einer ersten Ausführungsform;
- Figur 2: einen vergrößerten Ausschnitt aus der in Figur 1 gezeigten Querschnittsansicht ersten Holzfaserdämmstoffplatte, und
- Figur 3: eine vergrößerte Ansicht eines Querschnitts einer Holzfaserdämmstoffplatte gemäß einer zweiten Ausführungsform.

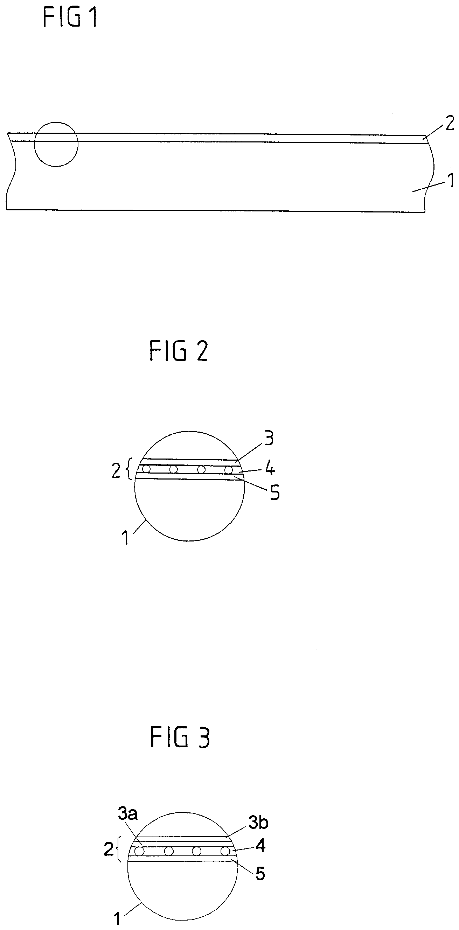

Figur 1 zeigt den Querschnitt durch eine Holzfaserdämmstoffplatte bestehend aus einem verpressten Holzfaser-Bindemittel-Gemisch 1. Das Holzfaser-Bindemittel-Gemisch 1 umfasst zu etwa 81% Holzfasern, 15% Kunststofffasern als Bindemittel, wobei hier sowohl Zweikomponentenfasern mit einem Polypropylenkern und einer Polyethylenummantelung oder Monofasern aus Polyethylen, vorzugsweise LDPE verwendet werden, und etwa 1 bis 10%, vorzugsweise 5% eines Flammenschutzmittels.

Auf das verpresste Holzfaser-Bindemittel-Gemisch 1 ist eine Kaschierung 2 aufgetragen.

In Figur 2 ist ein vergrößerter Ausschnitt der Holzfaserdämmstoffplatte mit einer detaillierten Ansicht der Kaschierung 2 gezeigt. Die Kaschierung 2 besteht aus einer luftundurchlässigen Schicht 3, einer Stützschicht 4 und einer Bindemittelschicht 5.

Die oberste luftundurchlässige Schicht 3 der Kaschierung 2 umfasst in der vorliegenden Ausführungsform eine Aluminiumfolie, die über Wärme leitende und elektrisch leitende Eigenschaften verfügt und somit eine Funktionsschicht darstellt.

Unterhalb der Aluminiumfolie als luftundurchlässige Schicht 3 ist ein Glasvliesgewebe als Stützschicht 4 angeordnet. Das Glasvliesgewebe kann in Form eines Netzes ausgebildet sein und dient der Erhöhung der Stabilität der auf dem Glasvliesgewebe angeordneten Aluminiumfolie und des fertigen Produktes.

Unterhalb des Glasvliesgewebes befindet sich die dritte Schicht der Mehrkomponentenfolie, und zwar eine Polyethylenschicht als Bindemittelschicht 5.

Die in Figur 3 gezeigte zweite Ausführungsform der vorliegenden Holzfaserdämmstoffplatte umfasst zwei luftundurchlässige Schichten 3a, 3b. Die erste luftundurchlässige Schicht 3a besteht aus Aluminiumfolie und die zweite luftundurchlässige Schicht 3b besteht aus einer Polypropylen-Folie. Der Verwendung der zusätzlichen Polypropylen-Folie verhindert eine unerwünschte Reaktion der Aluminiumfolie mit Wand- oder Bodenmaterial wie Estrich oder Beton, das mit der kaschierten Seite der Holzfaserdämmstoffplatte in Kontakt ist.

Entsprechend kann die Kaschierung 2 als eine Mehrkomponentenfolie beschrieben werden, bei der die Komponenten schichtartig aufgebracht sind. Die Kaschierung 2 wird nach oder auch parallel zur Vliesbildung aus dem Holzfaser-Bindemittel-Gemisch auf dasselbige aufgelegt. Während des Durchlaufens des mit der Kaschierung versehenen Holzfaservlieses durch einen Durchströmofen, wird die Polyethylenschicht als Bindemittelschicht 5 angeschmolzen und somit aktiviert. Das angeschmolzene Polyethylen kann zumindest teilweise in das Holzfaser-Bindemittel-Gemisch des Vlieses eindringen, und nach Abkühlen der verpressten Matte ist eine innige Verbindung der Kaschierung mit der Faserplatte sichergestellt.

### Ausführungsbeispiel

85% Holzfasern, die vorab mit 6% Flammschutzmittel auf atro Holz versehen wurde, werden mit 15% Bikomponentenfasern (Biko-Fasern) vermischt. Das Holzfaser-Bikofaser-Gemisch wird in einem bekannten Airlay Verfahren zu einer Matte verbunden.

Auf die eine großflächige Seite der Matte wird anschließend ein Folienpaket aus Aluminiumfolie-Glasvliesgewebe-Polyethylenschicht aufgerollt und folgend in einem Durchlaufofen mit warmer Luft beaufschlagt, wobei sich während der Bildung der Dämmstoffmatte selbst auch das Folienpaket mit dem Holzfaserdämmstoff verbindet. Die Dicke der so hergestellten Matte liegt zwischen 5 bis 30 mm.

Der Durchlaufofen umfasst mehrere Heizregister, durch den warme Luft in einem Register von oben und im nächsten von unten immer abwechselnd auf die Matte strömt. In Transportrichtung gesehen nimmt die Register-Einlauftemperatur von 120°C auf 150°C zu und die Register-Auslauftemperatur beträgt passend 75°C bis 130°C.

## Patentansprüche

1. Eine mit mindestens einer Kaschierung (2) versehene wärmedämmende und antistatische Holzfaserdämmstoffplatte (1) enthaltend Holzfasern und Kunststofffasern als Bindemittel mit einer Rohdichte zwischen 20 und 170 kg/m³,
**dadurch gekennzeichnet, dass**
die mindestens eine Kaschierung (2)
- mindestens zwei luftundurchlässige Schichten (3a, 3b), wobei die luftundurchlässigen Schichten (3a, 3b) eine obere, nach außen weisende erste Lage der Kaschierung (2) bildet,
- mindestens eine Stützschicht (4), wobei die mindestens eine Stützschicht (4) als eine zwischen Holzfaserdämmstoffplatte (1) und der mindestens einen luftundurchlässigen Schicht (3) angeordnete zweite Lage der Kaschierung (2) ausgebildet ist, und
- mindestens eine Bindemittelschicht (5), wobei die mindestens eine Bindemittelschicht (5) als eine zwischen Holzfaserdämmstoffplatte (1) und der mindestens einen Stützschicht (4) angeordnete dritte Lage der Kaschierung (2) ausgebildet ist,
umfasst, und
wobei eine erste luftundurchlässige Schicht (3a) aus Aluminium und eine zweite luftundurchlässige Schicht (3b) aus Kunststoffmaterial als die mindestens zwei luftundurchlässigen Schichten (3a, 3b) verwendet werden.

2. Holzfaserdämmstoffplatte nach Anspruch 1, **dadurch gekennzeichnet, dass** die zweite luftundurchlässige Schicht (3b) aus Kunststoffmaterial aus Polypropylenfolie besteht.

3. Holzfaserdämmstoffplatte nach einem der vorhergehenden Ansprüche, **dadurch gekennzeichnet, dass** die zweite luftundurchlässige Schicht (3b) aus Kunststoffmaterial die oberste, nach außen weisende Schicht der Kaschierung bildet.

4. Holzfaserdämmstoffplatte nach einem der vorhergehenden Ansprüche, **dadurch gekennzeichnet, dass** die mindestens eine Stützschicht (4) als eine zwischen der auf der Holzfaserdämmstoffplatte vorgesehenen Bindemittelschicht (5) und der mindestens einen luftundurchlässigen Schicht (3) angeordnete zweite Lage der Kaschierung (2) ausgebildet ist.

5. Holzfaserdämmstoffplatte nach einem der vorhergehenden Ansprüche, **dadurch gekennzeichnet, dass** die mindestens eine Stützschicht (4) aus mindestens einem Vlies, Gaze oder Gewebe, insbesondere aus mindestens einem Glasvliesgewebe besteht.

6. Holzfaserdämmstoffplatte nach einem der vorhergehenden Ansprüche, **dadurch gekennzeichnet, dass** die mindestens eine Bindemittelschicht (5) ein Bindemittel ausgewählt aus der Gruppe enthaltend Polyethylen, Polypropylen, Acrylnitril-Butadien-Styrol, Polyamid, Polyoxymethylen, Polystyrol enthält.

7. Holzfaserdämmstoffplatte nach einem der vorhergehenden Ansprüche, **gekennzeichnet durch** eine Rohdichte zwischen 50 und 150 kg/m³, insbesondere bevorzugt 100 und 140 kg/m³, und eine Dicke zwischen 3 bis 20 mm, bevorzugt 5 bis 15 mm, insbesondere bevorzugt 5 mm.

8. Verwendung einer Holzfaserdämmstoffplatte nach einem der vorhergehenden Ansprüche als Wärmedämmstoffplatte oder als antistatischer Unterboden von begehbaren Fußbodenoberflächen.

9. Verwendung einer Holzfaserdämmstoffplatte nach Anspruch 8 zur Gefachdämmung im Dachausbau.

10. Verfahren zur Herstellung einer mit mindestens einer Kaschierung (2) versehenen Holzfaserdämmstoffplatte nach einem der Ansprüche 1-7 umfassend die folgenden Schritte:
a) Herstellen von Holzfasern aus einem lignozellulosehaltigen Ausgangsmaterial,
b) In-Kontaktbringen der Holzfasern mit Kunststofffasern als Bindemittel
c) Aufbringen der Mischung von Holzfasern und den Kunststofffasern als Bindemittel auf mindestens ein Transportband,
d) Auflegen von mindestens einer Kaschierung (2) umfassend mindestens eine luftundurchlässige Schicht (3) aus Aluminium, mindestens eine Stützschicht (4), und mindestens eine Bindemittelschicht (5) auf das Transportband aufgebrachte Holzfaser-Kunststofffaser-Gemisch, und
e) Kalibrieren des mit der mindestens einen Kaschierung (2) versehenen Holzfaser-Kunststofffaser-Gemisches bei Temperaturen zwischen 130°C und 150°C, insbesondere bei 130°C.

11. Verfahren nach Anspruch 10, **dadurch gekennzeichnet, dass** das Auflegen der Kaschierung (2) auf die Unterseite und/oder Oberseite auf das auf das Transportband aufgebrachte Holzfaser-Kunststofffaser--Gemisch kontinuierlich erfolgt.

12. Verfahren nach einem der Ansprüche 10 bis 11, **dadurch gekennzeichnet, dass** das Kalibrieren gemäß Schritt e) in einem Ofen, insbesondere einem Durchlaufofen mit mehreren Heizregistern erfolgt, wobei die im Ofen erzeugte heiße Luft abwechselnd in einem Register von oben und in einem nächsten Register von unten auf die Matte strömt.

13. Verfahren zum kontinuierlichen Auflegen einer Kaschierung (2) umfassend mindestens eine Bindemittelschicht (5) auf einen Holzfaserkuchen, wobei die mindestens eine Bindemittelschicht (5) angeschmolzen wird, so dass eine kraftschlüssige Verbindung der mindestens einen Kaschierung (2) mit den Holzfasern des Holzfaserkuchens entsteht.

## Claims

1. A heat-insulating and antistatic wood fibre insulating board (1) provided with at least one lamination (2), containing wood fibres and plastic fibres as binding agents with a bulk density of between 20 and 170 kg/m3,
**characterized in that**
the at least one lamination (2) comprises
- at least two air-impermeable layers (3a, 3b), the air-impermeable layers (3a, 3b) forming an upper, outwardly facing first layer of the lamination (2),
- at least one support layer (4), the at least one support layer (4) being designed as a second layer of the lamination (2) arranged between the wood fibre insulating board (1) and the at least one air-impermeable layer (3), and
- at least one binder layer (5), the at least one binder layer (5) being designed as a third layer of lamination (2) arranged between the wood fibre insulating board (1) and the at least one support layer (4), and
wherein a first air impermeable layer (3a) of aluminum and a second air impermeable layer (3b) of plastic material are used as the at least two air impermeable layers (3a, 3b).

2. Wood fibre insulating board according to claim 1, **characterized in that** the second air-impermeable layer (3b) consists of plastic material of polypropylene film.

3. Wood fibre insulating board according to one of the preceding claims, **characterized in that** the second air-impermeable layer (3b) of plastic material forms the uppermost layer of the lamination pointing outwards.

4. Wood fibre insulating board according to one of the preceding claims, **characterized in that** the at least one support layer (4) is designed as a second layer of lamination (2) arranged between the binder layer (5) provided on the wood fibre insulating board and the at least one air-impermeable layer (3).

5. Wood fibre insulating board according to one of the preceding claims, **characterized in that** the at least one support layer (4) consists of at least one fleece, gauze or fabric, in particular of at least one glass fleece fabric.

6. Wood fibre insulating board according to one of the preceding claims, **characterized in that** the at least one binder layer (5) contains a binder selected from the group comprising polyethylene, polypropylene, acrylonitrile-butadiene-styrene, polyamide, polyoxymethylene, polystyrene.

7. Wood fibre insulating board according to one of the preceding claims, **characterized by** a bulk density between 50 and 150 kg/m³, in particular preferably 100 and 140 kg/m³, and a thickness between 3 and 20 mm, preferably 5 to 15 mm, in particular preferably 5 mm.

8. Use of a wood fibre insulating board according to one of the preceding claims as a thermal insulating board or as an antistatic subfloor of accessible floor surfaces.

9. Use of a wood fibre insulation board according to claim 8 for compartment insulation in the roof extension.

10. Process for the production of a wood fibre insulating board provided with at least one lamination (2) according to one of the claims 1-7 comprising the following steps:
(a) Producing wood fibres from a lignocellulosic starting material,
(b) Contacting the wood fibres with plastic fibres as binders,
(c) Applying the mixture of wood fibres and the plastic fibres as a binder to at least one conveyor belt,
(d) Applying at least one lamination (2) comprising at least one air-impermeable layer (3) of aluminium, at least one support layer (4), and at least one binder layer (5) onto the wood fibre-plastic fibre mixture applied to the conveyor belt, and
(e) Calibrating the mixture of wood fibre and plastic fibre provided with the at least one lamination (2) at temperatures between 130°C and 150°C, in particular at 130°C.

11. Method according to claim 10, **characterized in that** the lamination (2) is applied continuously to the underside and/or top of the wood fibre-plastic fibre mixture applied to the conveyor belt.

12. Method according to one of claims 10 to 11, **characterized in that** the calibration according to step e) is carried out in a furnace, in particular a continuous furnace with several heating registers, the hot air produced in the furnace flowing alternately in one register from above and in a next register from below onto the mat.

13. Method for continuously applying a lamination (2) comprising at least one binder layer (5) on a wood fibre cake, wherein the at least one binder layer (5) is melted, so that a frictional connection of the at least one lamination (2) with the wood fibres of the wood fibre cake is produced.

## Revendications

1. Plaque d'isolant en fibres de bois (1) antistatique et calorifuge pourvue d'au moins un doublage (2) contenant des fibres en bois et des fibres synthétiques en tant que liant avec une densité brute entre 20 et 170 kg/m³,
**caractérisée en ce que**
l'au moins un doublage (2) englobe
- au moins deux couches imperméables à l'air (3a, 3b), dans laquelle les couches imperméables à l'air (3a, 3b) forment une première strate supérieure du doublage (2) dirigée vers l'extérieur,
- au moins une couche de support (4), dans laquelle l'au moins une couche de support (4) est réalisée en tant qu'une deuxième strate du doublage (2) agencée entre la plaque d'isolant en fibres de bois (1) et l'au moins une couche imperméable à l'air (3), et
- au moins une couche de liant (5), dans laquelle l'au moins une couche de liant (5) est réalisée en tant qu'une troisième strate du doublage (2) agencée entre la plaque d'isolant en fibres de bois (1) et l'au moins une couche de support (4),
et
dans laquelle une première couche imperméable à l'air (3a) en aluminium et une deuxième couche imperméable à l'air (3b) en matière synthétique sont utilisées en tant que les au moins deux couches imperméables à l'air (3a, 3b).

2. Plaque d'isolant en fibres de bois selon la revendication 1, **caractérisée en ce que** la deuxième couche imperméable à l'air (3b) en matière synthétique consiste en une feuille de polypropylène.

3. Plaque d'isolant en fibres de bois selon l'une quelconque des revendications précédentes, **caractérisée en ce que** la deuxième couche imperméable à l'air (3b) en matière synthétique forme la couche supérieure du doublage dirigée vers l'extérieur.

4. Plaque d'isolant en fibres de bois selon l'une quelconque des revendications précédentes, **caractérisée en ce que** l'au moins une couche de support (4) est réalisée en tant qu'une deuxième strate du doublage (2) agencée entre la couche de liant (5) prévue sur la plaque d'isolant en fibres de bois et l'au moins une couche imperméable à l'air (3).

5. Plaque d'isolant en fibres de bois selon l'une quelconque des revendications précédentes, **caractérisée en ce que** l'au moins une couche de support (4) consiste en au moins un non-tissé, une gaze ou un tissu, en particulier en au moins un non-tissé en fibres de verre.

6. Plaque d'isolant en fibres de bois selon l'une quelconque des revendications précédentes, **caractérisée en ce que** l'au moins une couche de liant (5) contient un liant sélectionné dans le groupe contenant du polyéthylène, polypropylène, acrylonitrile butadiène styrène, polyamide, polyoxyméthylène, polystyrène.

7. Plaque d'isolant en fibres de bois selon l'une quelconque des revendications précédentes, **caractérisée par** une densité brute entre 50 et 150 kg/m³, en particulier de préférence 100 et 140 kg/m³, et une épaisseur entre 3 à 20 mm, de préférence 5 à 15 mm, en particulier de préférence 5 mm.

8. Utilisation d'une plaque d'isolant en fibres de bois selon l'une quelconque des revendications précédentes en tant que plaque calorifuge ou en tant que sous-plancher antistatique de surfaces de planchers praticables.

9. Utilisation d'une plaque d'isolant en fibres de bois selon la revendication 8 pour l'isolation entre structures dans l'aménagement des combles.

10. Procédé de fabrication d'une plaque d'isolant en fibres de bois pourvue d'au moins un doublage (2) selon l'une quelconque des revendications 1-7 englobant les étapes suivantes :
a) fabrication de fibres en bois à partir d'une matière première lignocellulosique,
b) mise en contact des fibres en bois avec des fibres synthétiques en tant que liant
c) application du mélange de fibres en bois et des fibres synthétiques en tant que liant sur au moins une bande transporteuse,
d) pose d'au moins un doublage (2) englobant au moins une couche imperméable à l'air (3) en aluminium, au moins une couche de support (4), et au moins une couche de liant (5) sur le mélange fibres en bois-fibres synthétiques appliqué sur la bande transporteuse, et
e) calibrage du mélange fibres en bois-fibres synthétiques pourvu de l'au moins un doublage (2) à des températures entre 130 °C et 150 °C, en particulier à 130 °C.

11. Procédé selon la revendication 10, **caractérisé en ce que** la pose du doublage (2) sur le côté inférieur et/ou côté supérieur sur le mélange fibres en bois-fibres synthétiques appliqué sur la bande transporteuse a lieu en continu.

12. Procédé selon l'une quelconque des revendications 10 à 11, **caractérisé en ce que** le calibrage selon l'étape e) a lieu dans un four, en particulier un four continu avec plusieurs registres de chauffage, dans lequel l'air chaud généré dans le four s'écoule tour à tour dans un registre du haut et dans un prochain registre du bas sur la natte.

13. Procédé de pose continue d'un doublage (2) englobant au moins une couche de liant (5) sur un gâteau de fibres en bois, dans lequel l'au moins une couche de liant (5) est fondue, de sorte qu'une liaison par force de l'au moins un doublage (2) avec les fibres en bois du gâteau de fibres en bois est créée.
